# EUROPEAN PATENT SPECIFICATION

(11) **EP 2 945 220 B1**
(45) Date of publication and mention of the grant of the patent: **08.04.2020**
(21) Application number: 14168532.1
(22) Date of filing: 15.05.2014
(51) Int. Cl.: H01M 10/617, H01M 10/6557, H01M 10/6561, H01M 10/6567

(54) **System for uniformly distributing temperature across batteries**
System zur gleichmäßigen Verteilung der Temperatur über Batterien
Système permettant de distribuer de manière uniforme la température dans des batteries

(43) Date of publication of application: 18.11.2015
(73) Proprietor: Go-Tech Energy Co., Ltd., New Taipei City 22183 (TW)
(72) Inventor: Soong, Tzu-Wen, 22183 New Taipei City (TW); Lai, Li-Zen, 22183 New Taipei City (TW)
(74) Representative: Lang, Christian

(56) References cited:
- JP-A- 2006 331 956
- US-A- 5 141 826
- US-A1- 2005 202 310
- US-A1- 2010 112 428
- US-A1- 2013 328 392
- US-A1- 2014 072 844
- Anonymous: "Magnetorheological fluid", , 3 February 2018 (2018-02-03), pages 1-8, XP055492515, Retrieved from the Internet: URL:https://en.wikipedia.org/wiki/Magnetor heological_fluid [retrieved on 2018-07-13]

## Description

### FIELD OF THE INVENTION

The present invention relates to a system for uniformly distributing temperature. More particularly, the present invention relates to a system for uniformly distributing temperature across batteries.

### BACKGROUND OF THE INVENTION

Rechargeable battery packs are widely used in many fields. From personal computers to electric vehicles, most products related to daily life are driven by rechargeable battery packs. Newly developed rechargeable battery packs are environmentally protective and have long working life times and stable quality. It makes people have a better life with less carbon dioxide generation and air pollution.

However, there are still some defects for rechargeable battery packs that need to be improved. One of them is aging due to an unbalance between single rechargeable battery cells. A rechargeable battery pack is composed of many rechargeable battery cells depending on its capacity. The rechargeable battery cells are linked to each other in series or parallel. They are also the key part of the rechargeable battery pack. The rechargeable battery cells become hot when they are charging or discharging. When the temperature of a rechargeable battery cell is too high, its life cycle will be reduced. Hence, how to prevent the rechargeable battery cells of getting heated, has been studied for a long time and achieves very good results, especially for rechargeable battery packs with large power capacity. On the other hand, there is still a trouble: non-uniform distribution of temperature across the rechargeable battery cells. It is a well-known factor causing unbalance of rechargeable battery cells. A rechargeable battery cell that is hotter than others will age faster. Therefore, its electric properties, such as power capacity, will become different from the others. Since the rechargeable battery pack only works if all rechargeable battery cells function healthily, the rechargeable battery pack may fail or its performance gets too worse for use, as soon as one or some of the rechargeable battery cells stop well working due to the unbalance problem.

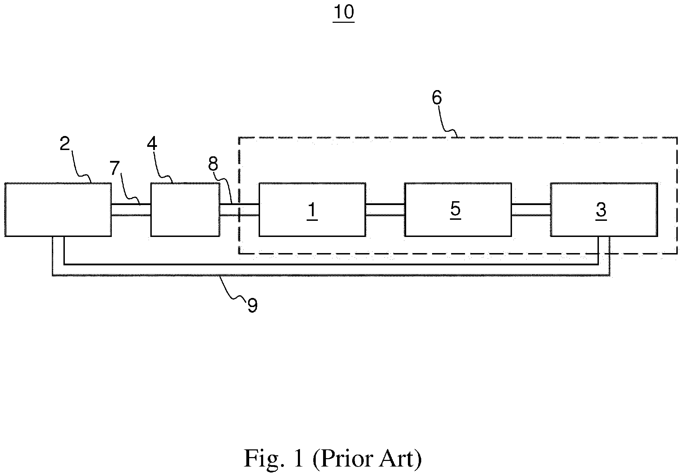

Hence, there are many prior arts providing different temperature controlling means to settle the problem mentioned above. One of them is disclosed in the US Pat. No. 8,426,050. Please refer to Fig. 1. A temperature control system 10 for cooling a rechargeable battery module 6 is illustrated. The system 10 includes a reservoir 2, a pump 4, and conduits 7, 8 and 9. The reservoir 2 holds a fluid inside. The pump 4 pumps the fluid from the reservoir 2 via the conduit 7. Thereafter, the pump 4 pumps the fluid into the rechargeable battery module 6 via the conduit 8. The rechargeable battery module 6 includes a cooling manifold 1, heat exchangers 5, and a cooling manifold 3 that will be explained in more detail below. The cooling manifold 1 is configured to provide a substantially equal flow rate of the fluid through each of the respective heat exchangers 5 in the rechargeable battery module 6 such that the rechargeable battery cells inside have a substantially equal amount of heat energy removed from the rechargeable battery cells. Thus, all of the rechargeable battery cells in the rechargeable battery module 6 are maintained at a substantially similar temperature resulting in the rechargeable battery cells having uniform operational characteristics including output voltages. The cooling manifold 3 receives the heated fluid from the heat exchangers 5 in the rechargeable battery module 6 and routes the heated fluid through the conduit 9 back to the reservoir 2.

US 8,426,050 describes a typical invention providing an architecture to cool down the temperature of the internal rechargeable battery cells by means of some other detailed parts. However, there is still a problem. It is obvious that the temperature of the fluid in the conduit 8 is cooler than that in the conduit 9 since the back flow of the fluid from the conduit 9 is cooled down by the external environment. But for the rechargeable battery cells, which are located closer to the conduit 8 side, the cooling effect (temperature drop) can be better. This is because the fluid carries heat from one rechargeable battery cell contacted first to others contacted later. The later ones cannot dissipate more heat than the former as both of them work under a similar situation and generate almost the same amount of heat. In addition, the cooling manifolds 1 and 3 and the heat exchangers 5 are complicated devices. Complexity causes higher costs for the system 10. Most of all, the system 10 can only cool down the rechargeable battery cells but fails to warm them up. For rechargeable battery packs to work in a chilling area, a proper heater to offer heat to the rechargeable battery cells is useful to yield longer operation of the rechargeable battery packs.

Document US 2010/112428 A1 further discloses a system comprising a plurality of battery units arranged in an assembly, so that an assembled battery is formed, wherein the assembled battery is arranged in a closed housing and surrounded by a coolant. Further, an endless belt is arranged in the housing in order to stir the coolant and to induce circulation of the coolant around the assembled battery for achieving uniform temperature distribution of the coolant, wherein the coolant in which the battery is immersed is sealed within the battery housing and is a fluorine-containing inert liquid (e.g. selected from a group consisting of Fluorinert™, Novec™ HFE (hydrofluoroether) and Novec™ 1230) or, alternatively, is a liquid, such as silicon oil. Document US 2005/202310 A1 discloses another system comprising a cell cluster formed by a plurality of battery units immersed in a heat conductive coolant fluid in a closed housing. In this case, said heat conductive fluid is disclosed as a rheological fluid rapidly changing its state from liquid to solid and back according to the changing magnetic field applied by a coil, wherein the application of the magnetic field causes the rheological fluid to circulate around the cell cluster.

However, a new system with a simple structure and low constructing costs implementing both controlling and uniformly distributing temperature across battery units is desired.

### SUMMARY OF THE INVENTION

Current temperature control systems for rechargeable battery cells or even rechargeable battery packs have some defects: temperature distribution is not uniform, costs are high. Therefore, a system with a simple structure and low construction costs implementing both controlling and uniformly distributing temperature across battery units is desired.

According to one aspect of the present invention, a system uniformly distributing temperature across battery units includes: a plurality of battery units, a heat conducting liquid containing magnetic materials, enclosing the battery units and being capable of substantially circulating around the battery units and/or along a specified path among the battery units; a closed housing, enclosing the battery units and the heat conducting liquid; and a circulating module, installed inside the closed housing, for driving the heat conducting liquid to circulate around the battery units and/or along the specified path. The circulating module is a motor with a magnetic rotor or a device having a magnetic rotor driven by change of magnetic forces outside the closed housing. Each battery unit is linked to each other in series or in parallel. When the circulating module drives the heat conducting liquid to circulate, temperature across the battery units is substantially uniformly distributed.

Preferably, the battery unit is a rechargeable battery cell or a rechargeable battery pack.

Preferably, the system further includes a circulating conduit, arranged among the battery units, for providing the specified path for the heat conducting liquid.

With the circulation of heat conducting liquid, temperature can be uniformly distributed across the battery units. Meanwhile, the system according to the present invention has low construction costs. The uniformly distributed temperature can be further adjusted by other means outside the system.

Supplementary, in another example of the present disclosure, a system for uniformly distributing temperature across battery units includes: a heat conducting fluid, enclosing the battery units and being capable of substantially circulating around the battery units and/or along a specified path across the battery units; a housing, accommodating the battery units and partially the heat conducting fluid, and having at least one ventilating hole where a portion of the heat conducting gas can move out of or into the housing; and a circulating module, installed inside the housing, for driving the heat conducting fluid to circulate around the battery units and/or along the specified path; and a circulating module, installed inside or outside the housing, for driving the heat conducting fluid to circulate around the battery units and/or along the specified path. Each battery unit is linked to each other in series or in parallel. When the circulating module drives the heat conducting fluid to circulate, temperature across the battery units is substantially uniformly distributed.

In the above-described example of the disclosure, the heat conducting fluid is a heat conducting gas or a heat conducting liquid. The heat conducting gas is air or inert gas. The heat conducting liquid is water, silicon oil or a liquid containing magnetic materials. The battery unit is a rechargeable battery cell or a rechargeable battery pack. The circulating module is a vibrator, a fan, a motor with a magnetic rotor or a device having a magnetic rotor driven by the change of magnetic forces outside the housing. The amount of the heat conducting fluid moving out of or into the housing during its circulation is smaller than an exchange amount of the whole heat conducting fluid in the housing before the circulation begins. The exchange amount is 30% of the whole heat conducting fluid in the housing or less.

### BRIEF DESCRIPTION OF THE DRAWINGS

Fig. 1 shows a prior art of a cooling system.
Fig. 2 illustrates the system according to the present invention.
Fig. 3 illustrates an embodiment according to the present invention.
Fig. 4 illustrates another example according to the present disclosure.
Fig. 5 shows the temperature distribution of rechargeable battery cells in a rechargeable battery pack for different systems.
Fig. 6 illustrates another example of a system for uniformly distributing temperature across battery units.

### DETAILED DESCRIPTION OF THE PREFERRED EMBODIMENTS

The present invention will now be described more specifically with reference to the following embodiments.

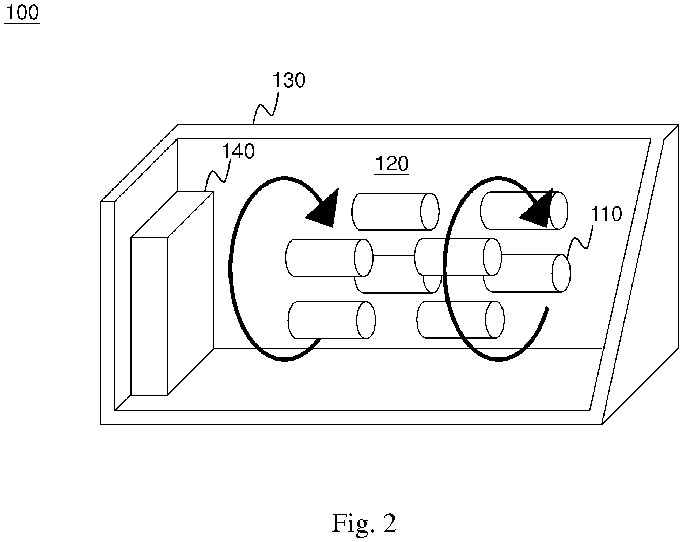

Please refer to Fig. 2 which shows a system 100 according to the present invention which is used to uniformly distribute temperature across rechargeable battery cells 110. For illustration purposes, there are eight rechargeable battery cells 110.

The system 100 includes a heat conducting liquid 120, a closed housing 130 and a pump 140. Please notice that Fig. 2 is just for illustration so that some portion of the closed housing 130 is removed and the parts inside the closed housing 130 can be seen. In fact, the closed housing 130 is well-formed so that it can keep the heat conducting fluid 120 inside without overflow or seepage. Besides, the rechargeable battery cells 110 are each linked to each other in series or in parallel. The number of the rechargeable battery cells 110 is not limited to eight. It can be any number used for a rechargeable battery pack with a designed capacity. The system 100 provided by the present invention can be applied to any combination of rechargeable battery cells 110. Hence, any detailed linkage between each rechargeable battery cell 110 and other auxiliary parts for fixing the rechargeable battery cells 110 and power conduction are possible but not described here. Only the system 100 itself and the operating method are shown.

In general, a heat conducting fluid can be silicon oil or another heat conducting gas or heat conducting liquid. For example, if a heat conducting gas is used, it can be air, one inert gas or a mixture of inert gases, or even a combination of air and inert gas, depending on the cooling effect that should be achieved in a system and its costs. However, according to the present invention a heat conducting liquid 120 containing magnetic materials is provided as heat conducting fluid. It will be illustrated later. The heat conducting liquid 120 encloses the rechargeable battery cells 110 without causing any physical or chemical damage. The heat conducting liquid 120 is capable of substantially circulating around the rechargeable battery cells 110. As shown in Fig. 2, the heat conducting liquid 120 can be driven to rotate around the outer side of the rechargeable battery cells 110. Since there are only eight rechargeable battery cells 110, the circulation passes all rechargeable battery cells 110 and uniformly takes away the heat they generate when working. Therefore, temperature across the rechargeable battery cells 110 is substantially uniformly distributed.

The closed housing 130 encloses the rechargeable battery cells 110 and the heat conducting liquid 120 inside. If the system 100 and the heat conducting liquid 120 are used as a rechargeable battery pack, the closed housing 130 can be the case of the rechargeable battery pack. Materials of the closed housing 130 can be metal, plastic, glass fiber or other suitable stuffs.

The circulating module 140 is the key part to operate the system 100. It is installed inside the closed housing 130. When it is operated, the heat conducting liquid 120 is driven to circulate around (as indicated by the arrows in Fig. 2) the rechargeable battery cells 110 or along a specified path across the rechargeable battery cells 110 so that a uniform distribution of temperature of the rechargeable battery cells 110 is achieved. The circulation can both pass through the specified path and move around the rechargeable battery cells 110. Since the heat conducting fluid 120 itself circulates around all parts, e.g. fixtures, a conductive sheet, a BMS etc., connected to the rechargeable battery cells 110, the temperature higher than the average temperature induced by heating will be taken away from the parts. Hence, temperature in the space in which the heat conducting liquid 120 circulates around is substantially uniformly distributed.

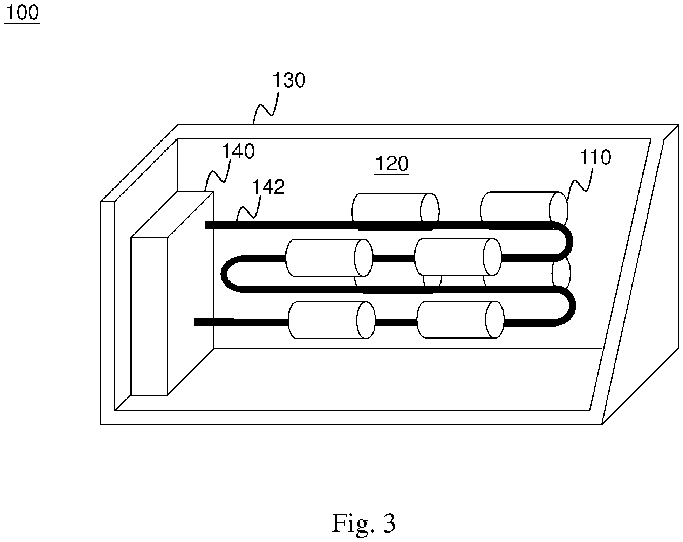

In one embodiment, the specified path can be physically implemented. Please refer to Fig. 3. For illustration, the architecture of the system 100 as previously described is used in the present embodiment. It differs in that the circulating module 140 is further linked to a circulation conduit 142. The circulation conduit 142 is arranged among the rechargeable battery cells 110. In Fig. 3, it is formed as a meandering shape between the front four rechargeable battery cells 110 and the back four rechargeable battery cells 110. The circulation conduit 142 provides the specified path to the heat conducting liquid 120. When the heat conducting liquid 120 is driven by the circulating module 140 and circulates through the circulation conduit 142, it takes away the heat from the rechargeable battery cells 110. The circulating module 140 can also exchange the heat conducting fluid 120 inside the circulation conduit 142 with that out of the circulation conduit 142. Different from the prior art of US 8,426,050, the temperature can be uniformly distributed across the rechargeable battery cells 110 after several circulations and preferably even across the whole space inside the closed housing 130, since the closed housing 130 forms a confined space.

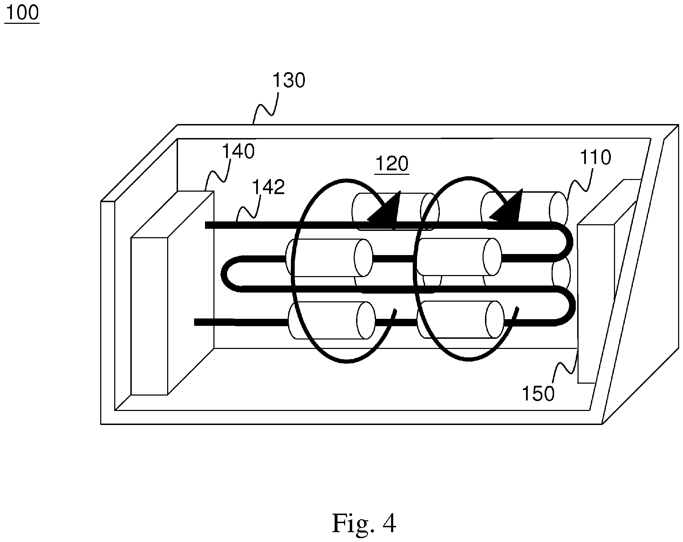

According to another example of the present disclosure, the heat conducting liquid 120 can both circulate around the rechargeable battery cells 110 and along the specified path across the rechargeable battery cells 110 to uniformly distribute the temperature across the rechargeable battery cells 110. Therefore an auxiliary pump 150 is mounted based on the architecture in Fig. 4. The auxiliary pump 150 is used to drive the heat conducting liquid 120 to circulate around (as indicated by the arrows in Fig. 4) the rechargeable battery cells 110. The system can distribute the temperature with two flows. According to the present invention, there can be any number of pumps or circulating modules to make many flows for the distribution of temperature. Another changed way is using some other materials for the heat conducting liquid 120 inside the circulation conduit 142, independent from the heat conducting liquid 120 outside the circulation conduit 142. The two materials circulate inside or outside the circulation conduit 142 respectively. In an example of the present disclosure, the heat conducting liquid 120 in the circulation conduit 142 is water and that outside the circulation conduit 142 is silicon oil. It is still possible to substantially uniformly distribute temperature. In general, the circulating module 140 or the pump 150 can be replaced by a vibrator. The vibrator still has a function to direct the flow of the heat conducting fluid. However, according to the present invention, the circulating module 140 or the pump 150 is in a form of a motor with a magnetic rotor. The heat conducting liquid 120 is a liquid containing magnetic materials. Thus, when the motor rotates the magnetic rotor, the magnetic materials in the liquid will move accordingly. As a result, the heat conducting liquid 120 circulates to distribute temperature uniformly. The motor with a magnetic rotor can further be a device having a magnetic rotor driven by the change of magnetic forces outside the closed housing 130. In other words, the driving device is installed outside the closed housing 130.

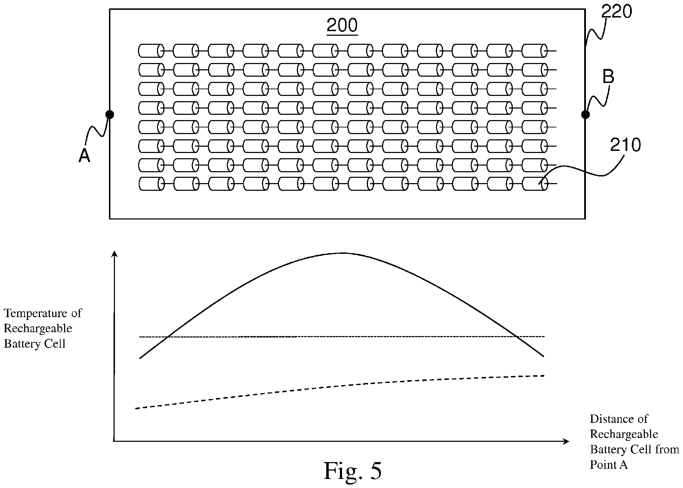

Please now refer to Fig. 5. Consider a rechargeable battery pack 200. It contains many rechargeable battery cells 210 inside a case 220. When the rechargeable battery pack 200 is not cooled down during operation, the temperature of each of the rechargeable battery cells 210 is distributed as a solid curve in a coordinate system below the sketch of the rechargeable battery pack 200. The horizontal axis shows a distance of one rechargeable battery cell 210 from point A in a cross-section of the rechargeable battery pack 200. It is obvious that the rechargeable battery cell 210 in the center of the rechargeable battery 210 has a higher temperature than those in the peripherals. It is easily thought that this is because it is harder to dissipate its heat by transmittance. When the cooling systems in prior arts are applied by circulating fluids through point A to point B to take away heat, the curve changes to a dashed one. It is found that the rechargeable battery cell 210 located closer to point A can be cooled down more than the one a little far from point A. The rechargeable battery cell 210 located closest to point B is the hottest one but still with better temperature distribution than for a system where no circulation for heat dissipation is applied.

When the system provided by the present invention is applied, the temperature distribution curve becomes a horizontal line (as shown in the dot line in Fig. 5). It means that all the rechargeable battery cells 210 get evenly cooldown. Although the average temperature may be higher than for the case that the cooling systems from the prior arts are applied, the temperature in the rechargeable battery pack 200 can be further cooled down by another cooling means (not shown), e.g. a fan or a ventilated environment, outside the case 220. The temperature is still uniformly distributed for the rechargeable battery cells 210. In addition, the rechargeable battery cells 210 can be uniformly heated by another heating means (not shown) outside the case 220 for the rechargeable battery pack 200 which works in a chilling area and requires a proper temperature to function well.

Of course, according to the spirit of the present invention, the treated target is not limited to the rechargeable battery cells, but can also be applied to rechargeable battery packs. Namely, a group of rechargeable battery cells are cooled down at the same time. However, the key point is to maintain the uniformity of temperature across all rechargeable battery packs.

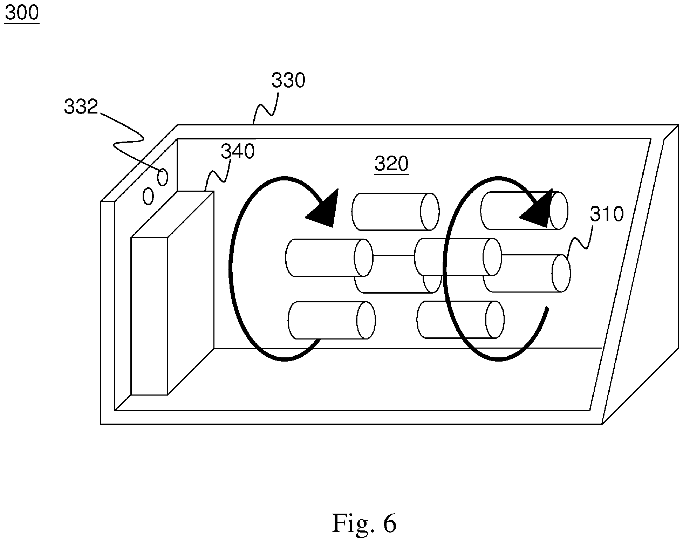

Please refer to Fig. 6. Another example of a system 300 for uniformly distributing temperature across battery units 310 is shown. Each battery unit 310 is linked to each other in series or in parallel. As mentioned above, the battery units 310 can be rechargeable battery cells or rechargeable battery packs. The system 300 has a heat conducting fluid 320, a housing 330 and a fan 340.

The present example is not restricted by a closed environment. Instead, a part of the heat conducting fluid 320 can move into and out of the housing 330. Therefore, air is the best medium to be used as the heat conducting fluid 320. The heat conducting fluid 320 encloses the battery units 310 and is capable of substantially circulating around the battery units 310 and/or along a specified path across the battery units 310. There can also be other internal path way guiders to lead the flow which is not discussed here.

Accordingly, in an embodiment not forming part of the invention, the housing 330 can only accommodate the battery units 310 rather than enclose them. The housing 330 can partially accommodate the heat conducting fluid 320 and have at least one ventilating hole 332. At the ventilating holes 332, a portion of the heat conducting fluid 320 can move out of or into the housing 330. Since the spirit of the example is to provide a substantially closed circulation for a uniform distribution of temperature across the battery units 310, the ventilating hole 332 is used to have a slight heat exchange with the external environment so that the system 300 can not only have a uniform temperature distribution for all battery units 310 but also allows slight temperature control. If there are too many ventilating holes 332 or the area of the ventilating holes 332 is too large, the internal status of the temperature distribution will be broken. Preferably, the amount of the heat conducting fluid 320 moved out of or into the housing 330 during circulating is smaller than an exchange amount of the whole heat conducting fluid 320 in the housing 330 before circulation begins. The exchange amount may be 30 % of the whole heat conducting fluid 320 in the housing 330 or less. Due to the fluid boundary layer effect, an exchange amount greater than a certain percentage can result in that the heat conducting fluid 320 in the housing 330 starts to circulate out of the housing 330. Besides, the percentage is changeable to different designs. In practice, 30 % is for reference. A higher percentage of the exchange amount can be included. It depends on whether a fixed portion of the heat conducting fluid 320 remains to circulate inside the housing 330.

The fan 340 or the circulating module is installed inside the housing 330. It is used to drive the heat conducting fluid 320 to circulate around the battery units 310 and/or along the specified path. When the fan 340 drives the heat conducting fluid 320 to circulate, temperature across the battery units 310 is substantially uniformly distributed. As described in the several examples above, although the present example is applied in the open housing 330, the heat conducting fluid 32 is not limited to air. It can be any heat conducting gas or heat conducting liquid. If it is a heat conducting gas, in addition to air, it can be an inert gas. The heat conducting liquid can be water, silicon oil or any liquid containing magnetic materials. The fan 340 can be replaced by a vibrator, a motor with a magnetic rotor or a device having a magnetic rotor driven by the change of magnetic forces outside the housing 330 according to different heat conducting fluids 320.

## Claims

1. A system (100) for uniformly distributing temperature across battery units (110), **characterized in that** the system (100) comprises:
a plurality of battery units (110);
a heat conducting liquid (120), enclosing the battery units (110) and being capable of substantially circulating around the battery units (110) and/or along a specified path among the battery units (110), wherein the heat conducting liquid contains magnetic materials;
a closed housing (130), enclosing the battery units (110) and the heat conducting liquid (120); and
a circulating module (140), installed inside the closed housing (130), for driving the heat conducting liquid (120) to circulate around the battery units (110) and/or along the specified path,
wherein each battery unit (110) is linked to each other in series or in parallel; and wherein when the circulating module (140) drives the heat conducting liquid (120) to circulate, temperature across the battery units (110) is substantially uniformly distributed, and
wherein the circulating module (140) is a motor with a magnetic rotor or a device having a magnetic rotor driven by change of magnetic forces outside the closed housing (130).

2. The system (100) according to claim 1, **characterized in that** each of the battery units (110) is a rechargeable battery cell or a rechargeable battery pack.

3. The system (100) according to claim 1, **characterized in that** the system (100) further comprises:
a circulation conduit (142), arranged among the battery units (110), for providing the specified path for the heat conducting liquid (120).

## Patentansprüche

1. System (100) zur gleichmäßigen Verteilung der Temperatur über Batterieeinheiten (110), **dadurch gekennzeichnet, dass** das System (100) umfasst:
eine Mehrzahl an Batterieeinheiten (110),
eine wärmeleitfähige Flüssigkeit (120), die die Batterieeinheiten (110) umgibt und in der Lage dazu ist, im Wesentlichen um die Batterieeinheiten (110) zu zirkulieren und/oder um einen definierten Pfad zwischen den Batterieeinheiten (110), wobei die wärmeleitfähige Flüssigkeit magnetische Materialien enthält,
ein geschlossenes Gehäuse (130), das die Batterieeinheiten (110) und die wärmeleitfähige Flüssigkeit (120) einschließt, und
ein Zirkulationsmodul (140), das in dem geschlossenen Gehäuse (130) installiert ist, um die wärmeleitfähige Flüssigkeit (120) anzutreiben, um die Batterieeinheiten (110) und/oder entlang des definierten Pfades zu zirkulieren,
wobei jede Batterieeinheit (110) in Serie oder parallel miteinander verbunden ist
und wobei, wenn das Zirkulationsmodul (140) die wärmeleitende Flüssigkeit (120) dazu antreibt, zu zirkulieren, die Temperatur im Wesentlichen gleichmäßig zwischen den Batterieeinheiten (110) verteilt ist, und
wobei das Zirkulationsmodul (140) ein Motor mit einem magnetischen Rotor oder eine Vorrichtung ist, die einen magnetischen Rotor aufweist, der durch eine Änderung von magnetischen Kräften außerhalb des geschlossenen Gehäuses (130) angetrieben wird.

2. System (100) gemäß Anspruch 1, **dadurch gekennzeichnet, dass** jede der Batterieeinheiten (110) eine wieder aufladbare Batteriezelle oder ein wieder aufladbares Batteriepack ist.

3. System (100) gemäß Anspruch 1, **dadurch gekennzeichnet, dass** das System (100) ferner umfasst:
eine Zirkulationsleitung (142), die zwischen den Batterieeinheiten (110) angeordnet ist, die den definierten Pfad für die wärmeleitende Flüssigkeit (120) bereitstellt.

## Revendications

1. Système (100) pour distribuer de manière uniforme la température dans des unités de batterie (110), **caractérisé en ce que** le système (100) comprend:
une pluralité d'unités de batterie (110);
un liquide conducteur de chaleur (120), enfermant les unités de batterie (110) et étant capable de circuler sensiblement autour des unités de batterie (110) et/ou le long d'un trajet spécifié entre les unités de batterie (110), dans lequel le liquide conducteur de chaleur contient des matériaux magnétiques;
un logement fermé (130), enfermant les unités de batterie (110) et le liquide conducteur de chaleur (120); et
un module de circulation (140), installé à l'intérieur du logement fermé (130), pour entraîner le liquide conducteur de chaleur (120) à circuler autour des unités de batterie (110) et/ou le long du trajet spécifié,
dans lequel chaque unité de batterie (110) est liée aux autres en série ou en parallèle;
et dans lequel lorsque le module de circulation (140) entraîne le liquide conducteur de chaleur (120) à circuler, la température dans les unités de batterie (110) est sensiblement distribuée de manière uniforme, et
dans lequel le module de circulation (140) est un moteur avec un rotor magnétique ou un dispositif ayant un rotor magnétique entraîné par un changement de forces magnétiques à l'extérieur du logement fermé (130).

2. Système (100) selon la revendication 1, **caractérisé en ce que** chacune des unités de batterie (110) est une cellule de batterie rechargeable ou un bloc-batterie rechargeable.

3. Système (100) selon la revendication 1, **caractérisé en ce que** le système (100) comprend en outre:
un conduit de circulation (142), agencé entre les unités de batterie (110), pour fournir le trajet spécifié pour le liquide conducteur de chaleur (120).
